# EUROPEAN PATENT SPECIFICATION

(11) **EP 1 384 173 B1**
(45) Date of publication and mention of the grant of the patent: **05.09.2012**
(21) Application number: 02716001.9
(22) Date of filing: 18.01.2002
(51) Int. Cl.: H04L 29/08

(54) **PORTABLE HIGH SPEED INTERNET ACCESS DEVICE**
TRAGBARES UND SCHNELLES INTERNETZUGANGSGERÄT
DISPOSITIF PORTABLE GRANDE VITESSE D'ACCES A INTERNET

(30) Priority: 19.01.2001 US 764418
(43) Date of publication of application: 28.01.2004
(73) Proprietor: Tuli, Raja, Montreal, Québec H2Z 1B1 (CA)
(72) Inventor: Tuli, Raja, Montreal, Québec H2Z 1B1 (CA)
(74) Representative: Walker, Ross Thomson
(86) International application number: PCT/CA2002/000048
(87) International publication number: WO 2002/057951

(56) References cited:
- EP-A- 0 889 402
- EP-A- 1 001 613
- WO-A-97/30556
- WO-A-98/40842
- US-A- 4 899 394
- US-A- 5 809 415
- US-A- 5 925 103

## Description

### Field of the Invention

The invention relates to a host computer system, which receives information, rasterizes it, compresses it and transmits it to a portable device which decompresses the image to display it on a screen. The result is a cost effective Internet access solution which allows interaction between the device and a host computer.

### Description of the Prior Art

The background of the present invention includes US Patent # 5925103, Internet Access Device, which describes an improved Internet access system, vastly different from the present invention. Other prior art would include palm top computers, hand-held computers and cellular telephones that have limited processing power due to design restrictions. Thus, these computers are much slower for accessing the Internet and World Wide Web.

Examples of the prior art in so far as they can be considered relevant to client/server systems, include:
WO 97/38389 (LEXTRON SYSTEMS INC.) 3 April 1997 (1997-04-03) EP-A-1 001 613 (HEWLETT-PACKARD COMPANY) 17 May 2000 (2000-05-17)
US-A-4 899 394 (LEE) 6 February 1990 (1990-02-06)
WO 97/30556 A (ERICSSON INC.) 21 August 1997 (1997-08-21)
US-A-5 809 415 (ROSSMANN) 15 September 1998 (1998-09-15)
EP-A-0 889 402 (I.B.M. CORP.) 7 January 1999 (1999-01-07)
WO 98/40842 A (COMPUTER INFORMATION AND SCIENCES INC.) 17 September 1998 (1998-09-17)
US-A-5 925 103 (MAGALLANES ET AL.) 20 July 1999 (1999-07-20)

### SUMMARY OF THE INVENTION

The present invention relates to a portable high speed Internet access device that can access the internet and World Wide Web as a wireless device as set forth in the appended claims.

A principal embodiment has a Web server connected to the Internet. This server contains a virtual browser which takes the image displayed in the browser and converts this image into a bit map which is compressed, and communicates via telephone lines to a cellular telephone. The cellular telephone is connected to the high speed internet access device of the invention commonly referred to as a PDA (Personal Digital Assistant) which is comprised of a display screen, battery and related micro-electronics. This enables the PDA to receive, decompress and view the bit map image sent from the virtual browser, and more importantly, through cellular phone connectivity to be able to input data from the PDA directly onto the server. In particular, the host computer or server receives vector information or compressed data in the form of HTML, JPEG, etc., which is displayed on a web page. The virtual browser virtually displays a virtual image on the server. That image, in whole of parts, is recompressed and sent to the PDA. The recompressed data format sent to the PDA, is not necessarily in the same format as the compressed data format first received by the server.

Another embodiment of the invention involves the server receiving vector information such as HTML or text and then rasterizing it to bit map format. It can then shown in memory through the virtual browser and is recompressed through a "loss less" method and sent to the PDA.

One embodiment of the invention comprises the PDA with an electronic touch screen keyboard, which remains invisible and only appears on a portion of the display screen when called upon by touching the keyboard icon. The entire display screen is covered with a transparent touch panel, which is essentially a matrix array of electrodes, which can detect the location of any pressure points applied to it. The keyboard disappears when touching a minimizing icon, revealing a refreshed image of the virtual browser. When the user is viewing the image displayed by a virtual browser on the PDA, and a text message needs to be entered at a specific location on the display, the user would have to point to this specific location, and pressing on the display screen's touch panel with a stylus tip, the cursor appears at that exact location, ready to input text. The keyboard would then be activated by pressing on the keyboard icon with a stylus tip, whereby a miniature keyboard layout would appear at the bottom of the display screen, with a portion of the display screen above the keyboard layout reserved to view text messages generated by the user, to be inputted in the image of the virtual browser at a later time. As the user enters text characters by pressing on various locations of the touch panel above the keyboard layout, the text message appears in the area above the keyboard, and when the user is finished inputting text, pressing on the send or return icons would send the entire text message to the specific location on the web page as viewed through the virtual browser on the server. The CPU of the PDA renders each text character on the display of the device for the user to view instantly, by making a bitmap. The PDA device translates strokes on the touch panel above the keyboard layout into characters, and the message is sent as a string of characters. A refreshed portion of virtual browser is sent back to the PDA, which displays the specific portion of the virtual browser that text was entered into, to verify that text was inputted at the correct location.

In a further embodiment of the invention, an automatic keyboard feature is available to the user when scrolling through the image of the virtual browser on the PDA, and a text message is to be entered at a specific location. The user would point at the desired location to enter text and a keyboard layout automatically appears ready for text input. As text is typed, the text message appears in the area above the keyboard layout, and after the send or return icons are selected, the keyboard layout disappears and the message is sent to the specific location on the virtual browser. The CPU of the PDA renders each text character on the display of the device for the user to view instantly, by making a bitmap.

In another embodiment, which communicates with the virtual browser in a similar fashion, the method of text transfer to the virtual browser is different. The display screen would have the keyboard layout at the bottom, with two smaller areas above, one of which displays text characters comprising the message being typed, and the other area displaying a background portion of the virtual browser. For each text character that is selected and appears in the text area, a message is sent to the virtual browser that tells which character is typed, and that specific text character is entered in the virtual browser in the portion of the image selected for text input. The CPU of the PDA renders each text character on the display of the device for the user to view instantly, by making a bitmap. A refreshed portion of virtual browser is sent back to the PDA, which displays the specific portion of the virtual browser that text was entered into, to verify that text was inputted at the correct location.

In a further embodiment, which communicates with the virtual browser in a similar fashion, the method of text transfer to the virtual browser is different. The display screen would have the keyboard layout at the bottom, with two smaller areas above, one of which displays text characters comprising the message being typed, and the other area displaying a background portion of the virtual browser. For each text character that is inputted in the text window, a message is sent to the virtual browser informing of the specific matrix location selected on the keyboard window. This matrix location is translated at the server end to determine what character is selected as the mapped layout of each character on the PDA keyboard is known, and this character entered in the virtual browser at the specific location selected. The CPU of the PDA renders each text character on the display of the device for the user to view instantly, by making a bitmap. A refreshed portion of virtual browser is sent back to the PDA, which displays the specific portion of the virtual browser that text was entered into, to verify that text was inputted at the correct location.

In another embodiment of the invention, an external keyboard is featured which is used to enter text characters as required. The keyboard interface can be wired or wireless. When the user wishes to enter text in the virtual browser, the specific location is selected by pressing on the touch panel and a text window appears in a portion of the display screen ready for text input. The keyboard connected to the PDA is then used to input text, and when the enter key is pressed, the message gets sent and the text window disappears. The text message is entered in the virtual browser at the specific location selected. The CPU of the PDA renders each text character on the display of the device for the user to view instantly, by making a bitmap. A refreshed portion of virtual browser is sent back to the PDA, which displays the specific portion of the virtual browser that text was entered into, to verify that text was inputted at the correct location.

In other embodiments of the invention, the image displayed in the virtual browser is compressed at the server in various amounts by different methods before sending to the PDA device.

Different parts of the image are compressed in different ways. Parts of the image that is text image are compressed by G4 compression techniques. Other parts of the image containing pictures are compressed by JPEG compression techniques. The entire image is converted to a raster image but different parts are converted at different depths of color. Text portions can be compressed by "loss less" techniques, which will result in complete image reproduction with no errors in text upon decompression, whereas pictures can be compressed by "lossy" techniques which upon decompression give a slightly degraded image quality for each compression. An image with black and white text and color graphics portions would be converted to a raster image, but only the text part of it reduced to black and white 1 bit and other graphics parts to 24 bit or other color raster images. Hence different parts of the image can be converted or reduced to different depths of color to resemble an actual web page with picture in color and text in black and white. The depths of color can be set by the user depending on the quality of image required, which affects the speed of refreshing the screen which also depends on the amount of graphics displayed. Text and pictures from a web page would get compressed separately at the server and then sent to the PDA. In the PDA, text or black and white portions of the image get decompressed first and displayed on the screen. Color portions get decompressed and are overlain in the image on the screen shortly after, enabling the user to view black and white portions of the image in advance.

A further embodiment would take the entire image to be viewed including all text and pictures and convert it to 1 bit raster. This file is compressed by G4 or other loss less compatible methods and sent to the PDA. When received by the PDA, this file is decompressed for the user to view the image, and the black and white portions are displayed first which can be done quickly and the graphics portions are overlaid progressively with color. This enables an image to be viewed quickly without the fine details of graphics, which follow moments after.

### BRIEF DESCRIPTION OF THE DRAWINGS

The invention is described in more detail below with respect to an illustrative embodiment shown in the accompanying drawings in which:
**Fig. 1** illustrates elements in the host computer, which communicates with a remote user and the device of the invention.
**Fig. 2** illustrates the image to be displayed compared with the displayable area of a browser window.
**Fig. 3** shows a typical subdivision of the image to be displayed.
**Fig. 4** illustrates file formats received and sent by the host computer.
**Fig. 5** illustrates the displayable area of the device with respect to portions of the image, which are sequentially decompressed prior to viewing.
**Fig. 6** illustrates the display screen of the device with a stylus tip used to select icons or other elements in the display.
**Fig. 7** illustrates the display of the device containing a keyboard layout.
**Fig. 8** illustrates the display of the device containing a keyboard layout and a text **area.**
**Fig. 9** illustrates the device interfaced with an external keyboard layout.
**Fig. 10** illustrates the display of the device containing a keyboard layout with saved files represented by icons.
**Fig. 11** illustrates icons on the device and icons on the host computer.
**Fig. 12** illustrates an external keyboard for faster character entry.

### DETAILED DESCRIPTION OF THE PREFERRED EMBODIMENTS

To facilitate description, any numeral identifying an element in one figure will represent the same element in any other figure.

The principal embodiment of the present invention aims to provide a device that allows a user to access the Internet or the World Wide Web (WWW), which is a device similar to a palm top computer. It is a further aim of the present invention, to offer a cost-competitive device. It is a further aim of the present invention, to increase the speed of refreshing the screen when the user clicks on a link and commands another page to be displayed.

Currently, existing palm top devices such as the Palm Pilot VII and Windows CE type devices contain an operating system, and within the operating system a mini-browser to interpret information received from the WWW or Internet and then display this information on the screen. This requires a powerful microprocessor, which is not advantageous in conserving power for portable applications and also minimizing costs.

The present invention discloses a method and system of storing previously viewed pages on the device. Thus a user is able to utilize a pointer or stylus tip to select and press a "back" button or a "forward" button to view previously accessed pages, and which pages are stored directly in the device. The invention further discloses a method of enabling the used to scroll to a specific area thereby initiating downloading in that area, or by the user clicking on a specific area to initiate the downloading.

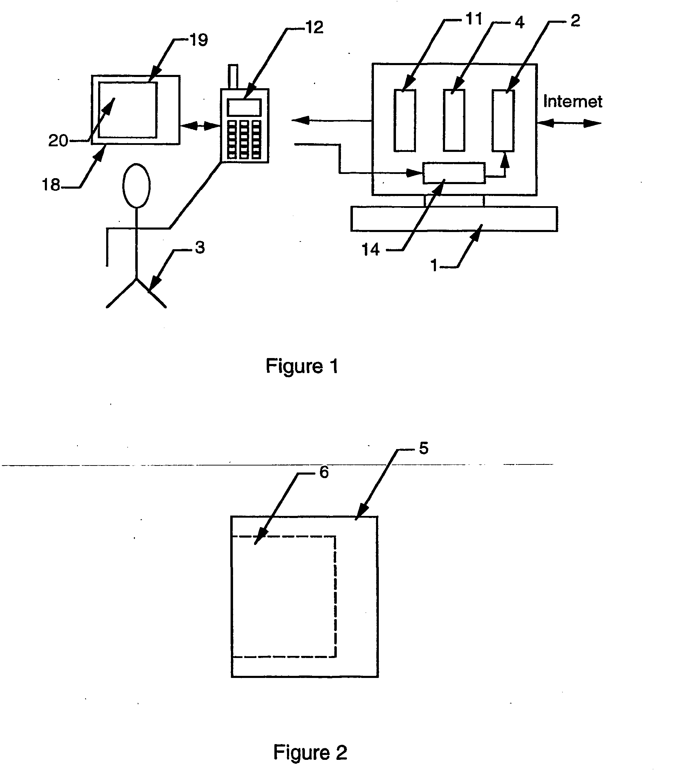

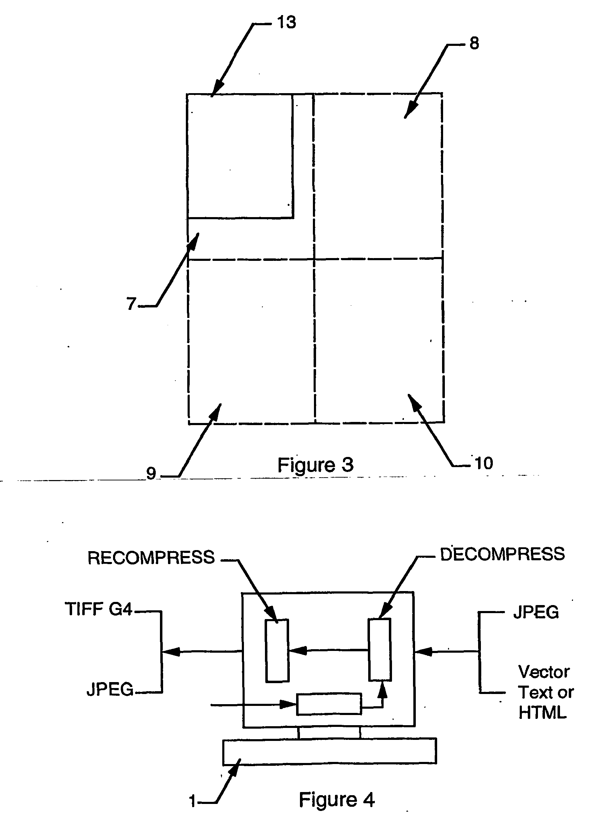

The principal embodiment of the present invention is disclosed in **Figure 1**. A host computer **1** is depicted which is connected to the Internet, and that host may also be a Web server. Running in the host computer, is a Web server program **2**. When a remote user **3** requests to view a Web page (or electronic message etc.) the Web server software receives HTML, JAVA, or other types of information and transmits this information to another software, the Browser Translator **4**. This software translates the information, (i.e. the entire image comprising graphics and text) received in the form of HTML, Java, etc. (as information may be gathered from different sources) and translates it to a black and white bit map or raster image. In another embodiment, the software translates the information into a raster or color image. The image **5**, as shown in **Figure 2**, contains the information that would normally be displayed on a single Web page. The translation program therefore, also acts as a virtual browser **6.** As can be seen in **Figure 2****,** the image **5** to be displayed in a browser window **6** is usually larger than the displayable area of the browser window **6.** The cellular telephone **12** of **Fig. 1** is connected to the high speed internet access device **18** of the invention commonly referred to as a PDA (Personal Digital Assistant) which is comprised of a display screen **19**, battery and related micro-electronics. This enables the PDA to receive, decompress and view the bit map image sent from the virtual browser **6,** and more importantly, through cellular phone connectivity to be able to input data from the PDA directly onto the server. In particular, the host computer or server receives vector information or compressed data in the form of HTML, JPEG, etc., which is displayed on a web page. The virtual browser virtually displays a virtual image on the server. That image, in whole or parts, is recompressed and sent to the PDA. The recompressed data format sent to the PDA, is not necessarily in the same format as the compressed data format first received by the server, as illustrated in **Fig. 4****.** For example, the incoming data from a Web page may be in the form of JPEG, which is decompressed and displayed on the virtual browser together with everything else, such as text, etc. Complex data is received by the virtual browser which includes text, graphic images, Java, JPEG, Tiff, etc., which are all completely rendered entirely onto a virtual display in the browser's memory. What is therefore rendered in the memory is all text and graphics portions combined into a single image. The color depth of this rendered image is reduced and this reduced image is further subdivided into smaller segments, with each segment bearing no relation to or limited only to text or graphic portions. These subdivided segments are recompressed and sent to the PDA but can be in the form of TIFF G4 or other formats, and not necessarily in the format as initially received, in this particular embodiment. The PDA would receive all compressed segments and store them in memory, which are all decompressed and assembled in order to display the original image.

Another embodiment of the invention involves the server receiving vector information such as HTML or text and then rasterizing it to bit map format. It can then shown in memory through the virtual browser and is recompressed through a "loss less" method and sent to the PDA.

The image **5** of **Fig. 2** is further divided into sections **7, 8, 9,** and **10,** as shown in **Figure 3****.** The image is divided after the bitmap or raster is created. The reason for the division (as will be explained later) is for the purpose of display priority on the user's display. The image **5** is then sent to another program **11** running on the host computer **1 (****Fig. 1****),** which compresses the image using a loss-less compression method. The compression method may be group 3 or group 4, or another method. The programs **4** and **11** can have multiple instances running simultaneously on the host server for the purpose of connecting to multiple users. The compressed image, after being processed by program **11,** is sent to the user, using a protocol in which information may be broken down into packets.

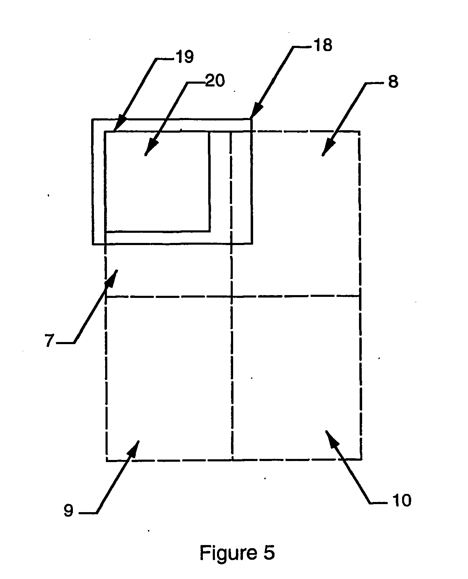

The information is received by the device **18** of the invention in **Fig. 5** which has the ability to display a monochrome image **20,** in its display window **19.** The information is decompressed and displayed in the order of priority such that part of image **7** of **Fig. 5****,** which substantially or completely covers the displayable area **19** of the device, is decompressed and displayed first and then sequentially the portions **8, 9** and **10** of the image are decompressed, and stored in an internal memory of the device to be displayed later when the user scrolls up, down, or sideways to these parts of the image.

In a further embodiment, the information received from the server by the device **18** of the invention in **Fig. 5** remains compressed, and only the area viewed by the device is decompressed, since the area of a web page to be viewed is larger than the device's display area. As the user scrolls up, down or sideways, only the parts of the image to be displayed are decompressed prior to viewing.

A CPU resident in the device therefore has the ability to decompress a bit map or raster image that may be larger than the size of the display and allow the user to traverse this bit map or raster image. The primary method of traversing the image is through conventional scroll bars positioned at the sides of the image. The resident CPU on the device has no ability to determine which part or parts of the image, that is being displayed, represent links to other Web pages etc. Thus, the translator program **4 (****Fig. 1****)** translates the image in the virtual browser **6** such that the words that represent links on the page **5 (****Fig. 2****)** are translated to be slightly bolder. The user may therefore consider text that is bold to be links.

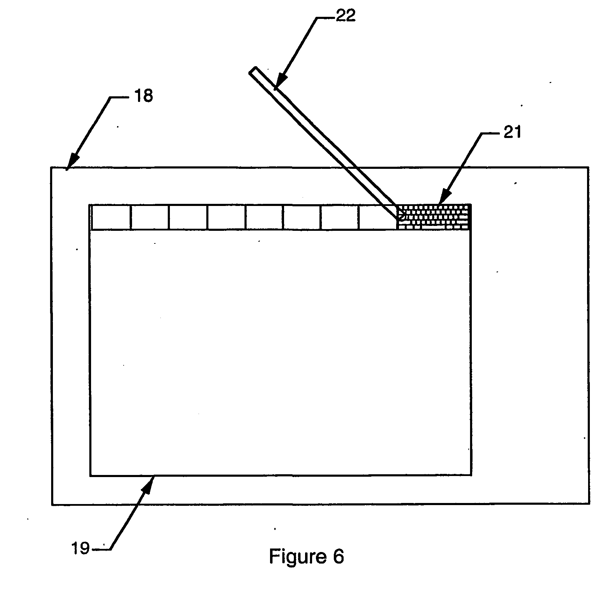

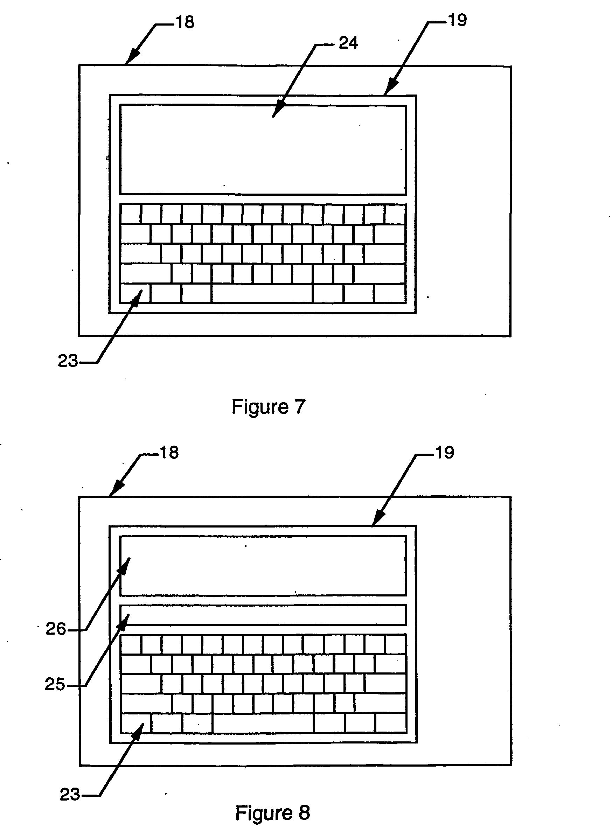

One embodiment of the invention comprises the PDA **18** of **Fig. 6** with an electronic touch screen keyboard, which remains invisible and only appears on a portion of the display screen when called upon by touching the keyboard icon **21.** The entire display screen **19** is covered with a transparent touch panel, which is essentially a matrix array of electrodes, which can detect the location of any pressure points applied to it. The keyboard disappears when touching a minimizing icon, revealing a refreshed image of the virtual browser. When the user is viewing the image displayed by a virtual browser on the PDA, and a text message needs to be entered at a specific location on the display ,the user would have to point to this specific location, and pressing on the display screen's touch panel with a stylus tip **22**, the cursor appears at that exact location, ready to input text. The keyboard would then be activated by pressing on the keyboard icon **21** with a stylus tip **22,** whereby a miniature keyboard layout **23** would appear at the bottom of the display screen **19** of **Fig. 7****,** with a portion of the display screen **24** above the keyboard layout reserved to view text messages generated by the user, to be inputted in the virtual browser at a later time. As the user enters text characters by pressing on various locations of the touch panel on the keyboard layout, the PDA **18** renders immediately what is typed for the user by creating a bitmap and showing it on the display screen **19.** Initially when a message is being typed it is all rendered by the CPU of the device, which is note the final version of how the message gets entered in the web page, as this is only an initial rendered display of the message which allows text editing at this stage before the message is finally sent to the host computer. The text message appears in the area **24** above the keyboard, and when the user is finished inputting text, pressing on the send or return icons would send the entire text message as a string of text characters to the host computer at the specific location on the web page, and not the bitmap sent to the host computer, at which time the server inserts text in the text area or text box in the virtual browser. The virtual browser takes a refreshed image of the web page, rasterizes or draws it in its memory. This refreshed portion of the virtual browser is sent back to the PDA as an image, which displays the specific portion of the virtual browser that text was entered into, to verify that text was inputted at the correct location.

In another embodiment of the invention, as each text character is rendered on the display of the device by the onboard CPU, each particular text character is sent in the background to the host computer. Sending each text character to the host computer occurs simultaneously, or shortly after each text character is rendered on the display, without waiting for a response from the host computer. Text editing is possible at this stage, whereby a message is sent from the PDA to the host computer, advising of which text characters are to be replaced with new characters. At the end of inputting text characters, pressing on the send or return icon would send a message to the host computer that the send or return icon has been clicked and a refreshed web page would be sent to the PDA to be displayed.

The pointing device may be a touch screen or tracking ball, etc. As soon as the user clicks on part of an image, the shape of the pointer changes from an arrow to an hourglass. A message is sent to the host computer, transmitting the location of the clicked down event. A program **14** of **Fig. 1** interprets the message and provides a virtual click down in the virtual browser created in the translator program **4.** If the user has pressed or clicked in an area of the image that does not represent a link or text box, a message is dispatched to the device which immediately changes the hourglass shape of the pointer back to an arrow (in the case of a touch screen, from an hour glass to nothing). Further to this, if the user has pressed or clicked on a part of the image which represents a link, a new Web page is extracted from the Internet or WWW, translated by translator program **4** of **Fig 1** into a bit map or raster, and compressed by compression program **11** and dispatched to the device where a new page is displayed. In a further embodiment, the image **5** of **Fig. 2** may be continuously updated and translated and sent to the device where it is continuously being refreshed. This occurs once every few seconds.

In a further embodiment of the invention, an automatic keyboard feature is available to the user when scrolling through the image of the virtual browser on the PDA, and a text message is to be entered at a specific location. The user would point at the desired location to enter text and a keyboard layout **23** of **Fig. 7** automatically appears ready for text input. How this happens is that a message gets sent to the host computer which knows the user has selected an area which can accept text, whereby the host computer responds with a message to the PDA device that it is ready to accept the keyboard entry sequence, at which time the PDA automatically pulls up the keyboard layout which appears at the bottom of the display screen **19.** As text is typed, the text message appears in the area **24** above the keyboard layout, and the onboard CPU of the PDA **18** renders immediately what is typed for the user, by creating a bitmap and showing it on the display screen **19.** After the send or return icons are selected, the keyboard layout disappears and the message is sent as a string of text characters to the specific location on the virtual browser in the host computer, and not the bitmap sent to the host computer. A refreshed portion of the virtual browser is sent back to the PDA **18** as an image, which displays the specific portion of the virtual browser that text was entered into, to verify that text was inputted at the correct location.

In another embodiment, which communicates with the virtual browser in a similar fashion, the method of text transfer to the virtual browser is different. The display screen **19** of **Fig. 8** would have the keyboard layout **23** at the bottom, with two smaller areas above, one being a text area **25** which displays text characters comprising the message being typed, and the other area **26** displaying a background portion of the virtual browser. For each text character that is selected and appears in the text area **25**, a message is sent to the virtual browser **6** that tells which character is typed, and that specific text character is entered in the virtual browser in the portion of the image selected.for text input. The onboard CPU of the PDA **18** renders immediately what is typed for the user, by creating a bitmap and showing it on the display screen **19.** The message that gets sent to the host computer is the actual text character and not the bitmap of it. A refreshed portion of the virtual browser is sent back to the PDA **18** as an image, which displays the specific portion of the virtual browser that text was entered into, to verify that text was inputted at the correct location.

In a further embodiment, which communicates with the virtual browser in a similar fashion, the method of text transfer to the virtual browser is different. The display screen **19** of **Fig. 8** would have the keyboard layout **23** at the bottom, with two smaller areas above, one is a text area **25** which displays text characters comprising the message being typed, and the other area **26** displaying a background portion of the virtual browser. For each text character that is inputted in the text area **25,** a message is sent to the virtual browser **6** informing of the specific matrix location selected on the keyboard window. This matrix location is translated at the server end to determine what character is selected as the mapped layout of each character on the PDA keyboard is known, and this character entered in the virtual browser at the specific location selected. The onboard CPU of the PDA **18** renders immediately what is typed for the user, by creating a bitmap and showing it on the display screen **19.** A refreshed portion of the virtual browser is sent back to the PDA **18** as an image, which displays the specific portion of the virtual browser that text was entered into, to verify that text was inputted at the correct location.

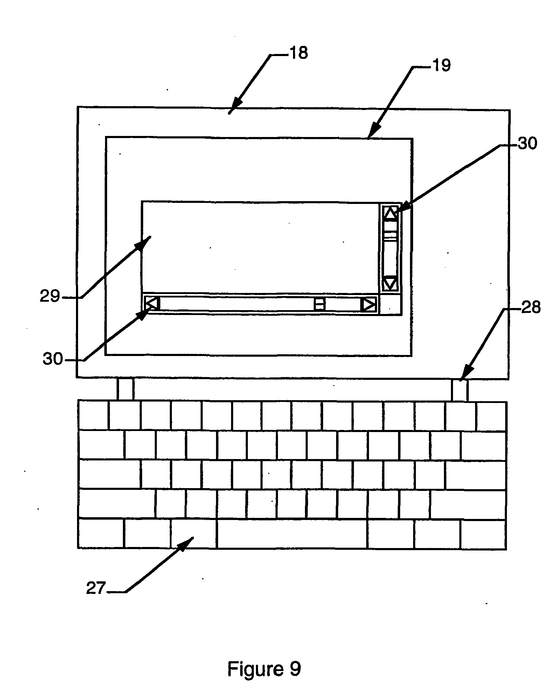

In another embodiment of the invention, an external keyboard **27** of **Fig. 9** is featured which is used to enter text characters as required. The keyboard interface **28** can be wired or wireless. When the user wishes to enter text , remotely in the virtual browser **6,** the specific location for text entry is selected by pressing on the touch panel **19** directly over the text entry location, and a text window **29** appears in a portion of the display screen ready for text input. The text window is equipped with conventional scroll bars **30** which enable the user to have a wider viewing access, since the entire image sent from the virtual browser is decompressed and stored in the PDA. The keyboard connected to the PDA is then used to input text, and when the enter key is pressed, the message gets sent as a string of text characters and the text window **29** disappears. The onboard CPU of the PDA **18** renders immediately what is typed for the user, by creating a bitmap and showing it on the display screen **19.** The message that gets sent to the host computer is the actual string text characters and not the bitmap of it. The text message is entered in the virtual browser at the specific location selected. A refreshed portion of the virtual browser is sent back to the PDA as an image, which displays the specific portion of the virtual browser that text was entered into, to verify that text was inputted at the correct location.

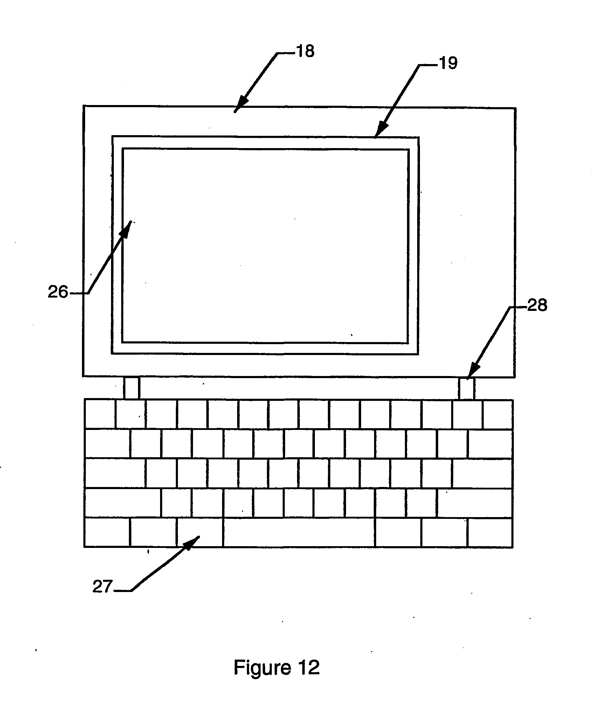

In a further embodiment of the invention, an external keyboard **27** of **Fig. 12** is also featured which is used to enter text characters as required. The keyboard interface **28** can be wired or wireless. When the user wishes to enter text remotely in the virtual browser **6,** the specific location for text entry is selected by pressing on the touch panel **19** of the PDA directly over the text entry location. For each text character that is directly inputted through the keyboard, a message is sent to the virtual browser **6** that tells it which character is typed, and that specific text character is entered in the virtual browser in the portion of the image selected for text input. The onboard CPU of the PDA **18** renders immediately what is typed for the user, by creating a bitmap and showing it on the display screen **19.** A refreshed portion of the virtual browser is sent back to the PDA **18** as an image, which displays the specific portion of the virtual browser that text was entered into, to verify that text was inputted at the correct location.

In other embodiments of the invention, the image displayed in the virtual browser is compressed at the server in various amounts by different methods before sending to the PDA device. Different parts of the image are compressed in different ways. Parts of the image that are text images are compressed by G4 compression techniques. Other parts of the image containing pictures are compressed by JPEG compression techniques. The entire image is converted to a raster image but different parts are converted at different depths of color. Text portions can be compressed by "loss less" techniques, which will result in complete image reproduction with no errors in text upon decompression, whereas pictures can be compressed by "lossy" techniques which upon decompression give a slightly degraded image quality for each compression. An image with black and white text and color graphics portions would be converted to a raster image, but only the text part of it reduced to black and white 1 bit and other graphics parts to 24 bit or other color raster images. Hence different parts of the image can be converted or reduced to different depths of color to resemble an actual web page with picture in color and text in black and white. The depths of color can be set by the user depending on the quality of image required, which affects the speed of refreshing the screen which also depends on the amount of graphics displayed. Text and pictures from a web page would get compressed separately at the server and then sent to the PDA. In the PDA, text or black and white portions of the image get decompressed first and displayed on the screen. Color portions get decompressed and are overlain in the image on the screen shortly after, enabling the user to view black and white portions of the image in advance. At the browser, the priority of decompression is determined by the depth of color, with the minimum depth being decompressed first.

A further embodiment would take the entire image to be viewed including all text and pictures and convert it to 1 bit raster. This file is compressed by G4 or other loss less compatible methods and sent to the PDA. When received by the PDA, this file is decompressed for the user to view the image, and the black and white portions are displayed first which can be done quickly and the graphics portions are overlaid progressively with color. This enables an image to be viewed quickly without the fine details of graphics, which follow moments after.

In another embodiment of the invention, the user may save and store the rasterized Web pages in the memory of the device, and therefore be able to view offline the stored rasterized pages, at a later time. The advantage of this embodiment is that the user does not have to connect to the host server to view the saved Web pages.

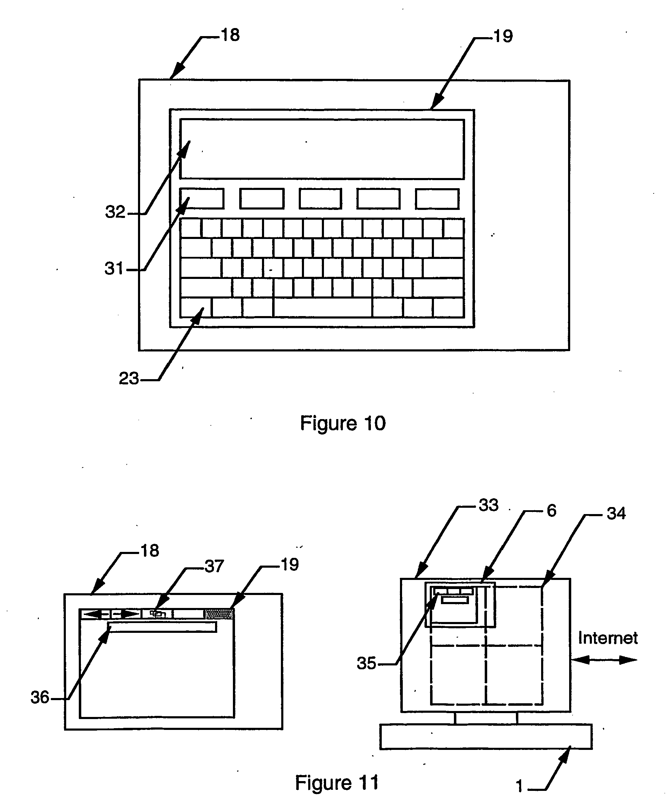

In a further related embodiment, when not connected to the server the user can generate multiple text files which are stored in internal memory on the PDA device **18** of **Fig. 10****,** which is equipped with flash RAM, a microprocessor, and related micro electronics. This is particularly useful in creating or responding to emails or other text related documents that are lengthy and may consume a lot of time to respond to. At a later time when the user is connected to the server, which has internet connection, the user can access an email account in which emails have to be responded to, or new ones sent. The exact location where text is to be entered in the virtual browser is selected with the stylus tip and the keyboard icon selected (or the keyboard appears automatically). The keyboard layout **23** appears at the bottom of the display screen **19** and a list of all saved files is displayed above this, represented by icons **31.** Pointing on each icon **31** allows the user to review each saved file in the area **32** and when the enter or send icon is pressed on the keyboard, the selected file is sent to the exact location on the virtual browser. A refreshed portion of the virtual browser is sent back to the PDA as an image, which displays the specific portion of the virtual browser that text was entered into, to verify that text was inputted at the correct location. The user can then send the file as an email or store it on the server as done conventionally.

In another embodiment of the invention, the server **1** contains the virtual browser **6** displaying part of a web page **34** such that the virtual browser contains some of the icons **35** displayed in the display screen **19** of the PDA **18,** as illustrated in **Fig. 11****.** These icons on the virtual browser may not be the same icons in the display screen of the PDA, but there are different ways to communicate between the PDA icons and the virtual browser's icons in conjunction with menu driven commands. The PDA may contain more icons than displayed on the virtual . browser, so that an icon selected on the PDA screen may represent a command on the virtual browser not represented by an icon. In this particular embodiment, the PDA does the translation of which command is executed when a stylus is used to select an icon on the display screen's touch panel, and a message is sent to the virtual browser to execute that command at specific locations on the virtual browser. For example, pressing the "back" icon on the PDA **18** is translated by the PDA and this command linked to the "back" icon on the virtual browser **6,** which can be in a different location. The PDA contains in its memory a mapped location address of all icons and menu commands on the server, so when an icon is selected on the display screen of the PDA, the PDA would link to the appropriate command or commands on the server, which are immediately executed. A single command executed from the PDA **18** can also represent a sequence of commands on both the PDA and the virtual browser **6.** For example, when the address icon is selected on the PDA **18** a text box **36** appears below and the keyboard automatically appears on the PDA display screen **19**, ready to input data into the text box. The PDA **18** would link the address in the text box **36** to the address box on the virtual browser and all text entered on the PDA gets inputted on the virtual browser. A single command executed from the PDA **18** can also be linked to menu driven commands on the virtual browser **6.** For example, when the user wishes to change the font size on the PDA display screen which may not always be suitable for a variety of users, the font size icon **37** is selected from the display screen **19** and a link is made to pre-selected font sizes on the menu items on the server. Hence, selecting the font size icon on the PDA screen would change the size of the font displayed on both the server and the PDA. Repeatedly selecting the font size icon takes the user progressively through all the pre-selected font sizes.

In another related embodiment, the server **1** of **Fig. 11** does all the translation of commands executed by the PDA **18** of the invention. Hence, the server has a mapped location of all icons on the PDA display screen **19.** When a command is executed by pressing on the touch screen of the PDA, a message is sent to the server informing of the specific location selected. The server would translate this location to a command as intended by the user. A refreshed portion of the virtual browser is sent back to the PDA **18** as an image.

In another embodiment of the present invention, images are only refreshed when an event occurs such as a mouse down event on a link or in a text box.

In a further embodiment only those portions of the image that changes may be transmitted from the host computer to the PDA device. Other images in the virtual browser that are continuously changing, such as banner advertisements, may be the only other images sent to the PDA device as they change.

The PDA device only contains enough memory to store the current displayable page. When the user presses a back or forward button, a message is sent to the host server, and the host server sends the reference page. The back and forward buttons etc. may be hard wired into the PDA device, or may be part of the display area.

Further to this, parts of the image representing buttons (and other elements) on the virtual browser may be sent as part of the compressed, image and buttons such as forward and back may be treated the same way as links are handled as previously described. In the principle embodiment therefore the back and forward buttons are hard coded as part of the device.

In another embodiment, the PDA device comprises a modem that permits the device to connect to a cellular telephone in digital format.

In another embodiment, the connection to the cellular telephone is made through an analog modem connected to an ear jack of the cellular telephone.

In yet another embodiment of the present invention, the modem is replaced by an analog modem that has the capability to be connected to a landline providing a standard 56kbps-type connection.

Further embodiments may provide connections through ISDN, cable modems etc.

In a further embodiment, the PDA device may contain a large screen to be used in a fashion similar to a home Internet appliance.

The invention has been described in detail with particular reference to the preferred embodiments thereof, but will be understood that variations and modifications can be effected within the scope of the invention.

## Claims

1. A host computer (1) which receives a web page from an outside source, and, contains browser software and compression software, wherein the browser software renders the web page, including both a text component and a graphics component, onto a virtual display in a host computer memory, **characterised in that** the browser software and the compression software are configured to translate and compress the web page, including both the text component and the graphics component, into a single compressed image (5), and to reduce the color depth of the text component and the color depth of the graphics component and whereby the host computer (1) sends the single image to a remote device (12) capable of receiving, decompressing and storing the single image into a remote device memory.

2. The host computer of claim 1 wherein color depth reduction is settable by a user of the remote device (12) as a means for adjusting the speed at which the remote device's screen (19) is refreshed.

3. The host computer of claim 2 wherein the single image (5) is sent to the remote device (12) in a plurality of sections.

4. The host computer of claim 3 wherein the text component and graphics component have different color depths.

5. The host computer of claim 4 wherein the text component and the color component are compressed with different respective compression techniques.

6. A method comprising:
receiving, at a host computer (1), a web page requested by a remote device (12), said web page including both a text component and a graphics component;
internally rendering said web page onto a virtual display of said host computer (1) through a browser window software program instantiated on said host computer (1) to create a single image (5) of said web page, said single image (5) of said web page depicting both said text component and said graphics component;
reducing a color depth of said text component and reducing a color depth of said graphics component so that said single image of said web page has text and graphics components with color depths that are comparatively reduced when respectively compared to the color depths of said web page's text and graphics components; and
sending the single image to the remote device (12).

7. The method of claim 6 wherein the color depth reduction is settable by a user.

8. The method of claim 7 where the settable color depth reduction is a means for adjusting the speed at which the remote device's displayed images are refreshed.

9. The method of claim 7 wherein the remote device (12) decompresses and displays portions of the web page having a first color depth before decompressing other portions of the web page having a second color depth, the first portion having a shallower color depth range than the second portion.

10. The method of claim 7 wherein the remote device (12) displays black and white before color.

11. A method performed by a handheld device (12), comprising:
requesting a web page;
receiving in response a single image (5) of said web page, said single image (5) having both a text component and a graphics component, where, respective color depths of both said text component and said graphics component are reduced as compared to their color depths as defined on said web page; and,
decompressing and rendering said single image on a display of said hand held device (12).

12. The method of claim 11 wherein color depth reduction is settable by a user of said handheld device (12).

13. The method of claim 11 wherein said displaying of said single image (5) includes displaying shallower color depth components before deeper color depth components.

14. The method of claim 13 wherein black and white components are displayed before color components.

## Patentansprüche

1. Hostcomputer (1), der von einer anderen Quelle eine Webseite empfängt und Browsersoftware und Komprimierungssoftware enthält, wobei die Browsersoftware die Webseite, einschließlich sowohl einer Text- als auch einer Grafikkomponente, auf einer virtuellen Anzeige in einem Hostcomputerspeicher wiedergibt, **dadurch gekennzeichnet, dass** die Browsersoftware und die Komprimierungssoftware dafür eingerichtet sind, die Webseite, einschließlich sowohl der Textals auch der Grafikkomponente, zu einem einzelnen komprimierten Bild (5) umzuwandeln und zu komprimieren und die Farbtiefe der Textkomponente sowie die Farbtiefe der Grafikkomponente zu reduzieren und wobei der Hostcomputer (1) das einzelne Bild zu einem entfernten Gerät (12) sendet, das zum Empfangen, Dekomprimieren und Speichern des einzelnen Bildes in einen Speicher des entfernten Gerätes in der Lage ist.

2. Hostcomputer nach Anspruch 1, wobei die Farbtiefenreduktion durch einen Benutzer des entfernten Gerätes (12) als Mittel zum Justieren der Geschwindigkeit einstellbar ist, mit welcher die Bildschirmanzeige (19) des entfernten Gerätes aktualisiert wird.

3. Hostcomputer nach Anspruch 2, wobei das einzelne Bild (5) in mehreren Abschnitten zum entfernten Gerät (12) gesandt wird.

4. Hostcomputer nach Anspruch 3, wobei die Textkomponente und die Grafikkomponente verschiedene Farbtiefen aufweisen.

5. Hostcomputer nach Anspruch 4, wobei die Textkomponente und die Grafikkomponente mit verschiedenen entsprechenden Komprimierungstechniken komprimiert werden.

6. Verfahren, Folgendes umfassend:
Empfangen einer von einem entfernten Gerät (12) angeforderten Webseite in einem Hostcomputer (1), wobei die Webseite sowohl eine Text- als auch eine Grafikkomponente beinhaltet,
internes Wiedergeben der Webseite auf einer virtuellen Anzeige des Hostcomputers (1) durch ein Browserfenster-Softwareprogramm, das auf dem Hostcomputer (1) instanziiert ist, um ein einzelnes Bild (5) der Webseite zu erzeugen, wobei das einzelne Bild (5) der Webseite sowohl die Textkomponente als auch die Grafikkomponente darstellt,
Reduzieren einer Farbtiefe der Testkomponente und Reduzieren einer Farbtiefe der Grafikkomponente derart, dass das einzelne Bild der Webseite Text- und Grafikkomponenten mit Farbtiefen aufweist, die im entsprechenden Vergleich zu den Farbtiefen der Text- und der Grafikkomponente der Webseite vergleichsweise reduziert sind, und
Senden des einzelnen Bildes zum entfernten Gerät (12).

7. Verfahren nach Anspruch 6, wobei die Farbtiefenreduktion durch einen Benutzer einstellbar ist.

8. Verfahren nach Anspruch 7, wobei die einstellbare Farbtiefenreduktion ein Mittel zum Justieren der Geschwindigkeit ist, mit welcher die am entfernten Gerät angezeigten Bilder aktualisiert werden.

9. Verfahren nach Anspruch 7, wobei das entfernte Gerät (12) Abschnitte der Webseite dekomprimiert und anzeigt, die eine erste Farbtiefe aufweisen, bevor Abschnitte der Webseite mit einer zweiten Farbtiefe dekomprimiert werden, wobei der erste Abschnitt einen geringeren Farbtiefenbereich aufweist als der zweite Abschnitt.

10. Verfahren nach Anspruch 7, wobei das entfernte Gerät (12) vor den Farben Schwarz/Weiß anzeigt.

11. Verfahren, ausgeführt von einem Handgerät (12), Folgendes umfassend:
Anfordern einer Webseite,
als Reaktion darauf Empfangen eines einzelnen Bildes (5) der Webseite, wobei das einzelne Bild (5) sowohl eine Text- als auch eine Grafikkomponente aufweist, wobei entsprechende Farbtiefen sowohl der Text- als auch der Grafikkomponente im Vergleich zu ihren auf der Webseite definierten Farbtiefen reduziert werden, und
Dekomprimieren und Wiedergeben des einzelnen Bildes auf einer Anzeige des Handgerätes (12).

12. Verfahren nach Anspruch 11, wobei die Farbtiefenreduktion durch einen Benutzer des Handgerätes (12) einstellbar ist.

13. Verfahren nach Anspruch 11, wobei das Anzeigen des einzelnen Bildes (5) das Anzeigen von Komponenten mit geringerer Farbtiefe vor dem Anzeigen von Komponenten mit größerer Farbtiefe beinhaltet.

14. Verfahren nach Anspruch 13, wobei Schwarz-/Weißkomponenten vor Farbkomponenten angezeigt werden.

## Revendications

1. Un ordinateur hôte (1) qui reçoit une page Web d'une source extérieure et qui contient un logiciel de navigation et un logiciel de compression, dans lequel le logiciel de navigation rend la page Web, y compris un composant textuel et un composant graphique, sur un affichage virtuel dans une mémoire d'ordinateur hôte, **se caractérisant par le fait que** le logiciel de navigation et le logiciel de compression sont configurés pour traduire et compresser la page Web, y compris le composant textuel et le composant graphique, dans une seule image compressée (5), et pour réduire la profondeur de couleur du composant textuel et la profondeur de couleur du composant graphique ; l'ordinateur hôte (1) envoyant l'image à un dispositif distant (12) capable de recevoir, de décompresser et de stocker l'image dans la mémoire d'un dispositif distant.

2. L'ordinateur hôte de la revendication 1, dans lequel la réduction de la profondeur de couleur peut être réglée par un utilisateur du dispositif distant (12) afin d'ajuster la vitesse à laquelle l'écran du dispositif distant (19) est rafraîchi.

3. L'ordinateur hôte de la revendication 2, dans lequel l'image (5) est envoyée au dispositif distant (12) en plusieurs sections.

4. L'ordinateur hôte de la revendication 3, dans lequel le composant textuel et le composant graphique possèdent des profondeurs de couleur différentes.

5. L'ordinateur hôte de la revendication 4, dans lequel le composant textuel et le composant de couleur sont compressés avec des techniques de compression différentes.

6. Un procédé consistant à :
recevoir, sur un ordinateur hôte (1), une page Web demandée par un dispositif distant (12), ladite page Web comprenant un composant textuel et un composant graphique ;
rendre en interne la page Web sur un affichage virtuel de l'ordinateur hôte (1) par un logiciel de fenêtre de navigation installé sur l'ordinateur hôte (1) afin de créer une image (5) de la page Web, ladite image (5) de la page Web représentant le composant textuel et le composant graphique ;
réduire une profondeur de couleur du composant textuel et réduire une profondeur de couleur du composant graphique de façon à ce que l'image de la page Web possède des composants textuels et graphiques dont les profondeurs de couleur sont comparativement réduites par rapport aux profondeurs de couleur des composants textuels et graphiques de la page Web ; et
envoyer l'image au dispositif distant (12).

7. Le procédé de la revendication 6, dans lequel la réduction de la profondeur de couleur peut être réglée par un utilisateur.

8. Le procédé de la revendication 7, dans lequel la réduction de profondeur de couleur réglable permet de régler la vitesse à laquelle les images affichées du dispositif distant sont rafraîchies.

9. Le procédé de la revendication 7, dans lequel le dispositif distant (12) décompresse et affiche des parties de la page Web ayant une première profondeur de couleur avant de décompresser d'autres parties de la page Web ayant une deuxième profondeur de couleur, la première partie ayant une gamme de profondeurs de couleur moins élevée que la deuxième partie.

10. Le procédé de la revendication 7, dans lequel le dispositif distant (12) affiche du noir et blanc avant la couleur.

11. Un procédé effectué par un dispositif portatif (12) consistant à :
demander une page Web ;
recevoir en réponse une image (5) de la page Web, ladite image (5) ayant un composant textuel et un composant graphique, où les profondeurs de couleur respectives du composant textuel et du composant graphique sont réduites par rapport aux profondeurs de couleur définies sur la page Web ; et
décompresser et rendre l'image sur un affichage du dispositif portatif (12).

12. Le procédé de la revendication 11, dans lequel la réduction de profondeur de couleur peut être réglée par un utilisateur du dispositif portatif (12).

13. Le procédé de la revendication 11, dans lequel l'affichage de l'image (5) suppose l'affichage des composants à profondeur de couleur plus réduite avant l'affichage des composants à profondeur de couleur plus élevée.

14. Le procédé de la revendication 13, dans lequel les composants en noir et blanc sont affichés avant les composants en couleur.
